# EUROPÄISCHE PATENTSCHRIFT

(11) **EP 1 944 193 B1**
(45) Veröffentlichungstag und Bekanntmachung des Hinweises auf die Patenterteilung: **19.10.2011**
(21) Anmeldenummer: 08000550.7
(22) Anmeldetag: 14.01.2008
(51) Int. Cl.: B60N 2/20

(54) **Sitzlehnengriff mit integrierter Entriegelung**
Seat tilt device with integrated release
Poignée d'accoudoir de siège doté d'un déverrouillage intégré

(30) Priorität: 15.01.2007 DE 102007002186
(43) Veröffentlichungstag der Anmeldung: 16.07.2008
(73) Patentinhaber: Volkswagen Aktiengesellschaft, 38436 Wolfsburg (DE)
(72) Erfinder: Jöhnk, Benno, 38550 Isenbüttel (DE)

(56) Entgegenhaltungen:
- WO-A-93/12952
- DE-A1- 2 453 732
- DE-B3- 10 328 504

## Beschreibung

Die Erfindung betrifft eine Betätigungseinrichtung, insbesondere einen Sitzlehnengriff, mit den im Oberbegriff des Anspruchs 1 genannten Merkmalen. Eine derartige Betätigungseinrichtung ist aus der DE 24 53 732 A1 bekannt.

Es ist bekannt Sitze, insbesondere Vordersitze von Kraftfahrzeugen, zum Zwecke des Zugangs zu den Fondsitzen mit Betätigungseinrichtungen am Rückenlehnenteil und/oder am Sitzteil auszustatten.

Zumeist sind diese Betätigungseinrichtungen der verschiedensten Art seitlich oder am oberen Rand des Rückenlehnenteiles oder seitlich am Sitzteil angeordnet.

Die Betätigungseinrichtungen wirken zumeist auf Bowdenzüge, c ie Bewegungen der Betätigungseinrichtungen auf angeschlossene Mechanismen übertragen, Insbesondere die Anwendung bei Fahrzeugsitzen ist sehr vielfältig.

So ist es beispielsweise bekannt, Bowdenzüge in Mechanismen zum Einstellen beziehungsweise zum Verstellen der Krümmung der Sitzrückenlehne, zum Lösen von Arretiereinrichtungen für ein Längsverstellen der Fahrzeugsitze oder für ein Umklappen von Sitzrückenlehnen, um diese beispielsweise in eine Tischposition zu bringen, einzusetzen.

Beispielhaft sind die Patentschriften DE 196 47 271 C2 und DE 43 14 443 C1 oder die Patentschriften DE 101 63 611 B4 und DE 103 28 504 B3 genannt, die jeweils Entriegelungsbeziehungsweise Verriegelungsvorrichtungen beschreiben, die über Betätigungshebel, Betätigungsstangen oder Bowdenzuganbindungen Bewegungen der Entriegelungsbeziehungsweise Verriegelungsvorrichtungen auf angeschlossene Mechanismen übertragen.

Bekannte Betätigungseinrichtungen sind oft schwierig zu bedienen, beispielsweise weil sie eine geringe Angriffsfläche aufweisen und/oder einen vergleichsweise hohen Kraftaufwand erfordern.

Zudem ist bei den meisten Betätigungseinrichtungen über den jeweils angeschlossenen Mechanismus nicht nur das Entriegelungselement, sondern gleichzeitig auch das Führungselement zum Verstellen der jeweiligen Komponenten, beispielsweise dem Sitzteil und/oder der Rückenlehne, angeordnet.

Das Entriegelungselement wird nach der Entriegelung dazu ger utzt die Rückenlehne und/oder das Sitzteil zu betätigen und zu führen. Diese Doppelfunktion führt oft dazu, dass das Entriegelungselement einerseits auf die Entriegelungsfunktion als auch auf die Betätigungskräfte aufnehmende Bedienfunktion ausgelegt werden muss. Nach einer öfteren Bedienung führt dies in vielen Fällen dazu, dass die einwirkenden Kräfte der Bedienhandiungen auf das Führungselement der Betätigungseinrichtungen, Welches gleichzeitig als Entriegelungselement dient, aus seiner Normalposition heraus verstellt wird, so dass es teilweise zum Verhaken der angeschlossenen Bowdenzugsysteme in den angeschlossenen Mechanismen kommt. Teilweise bekommt die Betätigungseinrichtung während ihrer Lebensdauer so viel Spiel, dass eine spielfreie Bedienung nicht mehr möglich ist oder es während der Fahrt sogar zu Klappergeräuschen der Betätigungseinrichtung kommt, auch wenn die Betätigungseinrichtungen nicht bedient wird.

Hier setzt nun die Erfindung an, deren Aufgabe darin besteht, eine Betätigungseinrichtung der eingangs genannten Art unter besonderer Berücksichtigung ergonomischer Gesichtspunkte, wie eine leichte und komfortable händische Betätigung, auszubiklen. Darüber hinaus sollen Wartungsfreiheit und eine lange Lebensdauer ohne das Auftreten von Klappergeräuschen sichergestellt werden.

Die Aufgabe wird durch eine Betätigungseinrichtung mit den Merkmalen des Patentanspruchs 1 gelöst.

Dabei führt in bevorzugter Ausgestaltung der Erfindung eine Angriffsrichtung der Einhandbedienung am Führungselement und dem Entriegelungse ement - aus verschiedenen Richtungen -zur Verlagerung des Innenausstattungsteiles und zu einer von der Angriffsrichtung unabhängigen gleichgerichteten Entriegelungsbevegung des Entriegelungsmittels.

Bevorzugt ist die Einhandbedienung am Führungselement und dem Entriegelungselement somit aus verschiedenen Richtungen beispielsweise gegenüberliegenden Richtungen bezüglich des Innenausstattungsteiles von vorn und hinten oder von links oder rechts, je nach Anordnung der Betätigungseinrichtung, vornehmbar.

Die stets gleichgerichtete Entriegelungsbewegung des Entriegelungselementes ist in bevorzugter Ausgestaltung eine Schwenkbewegung, deren Schwenkachse quer zur Angriffsrichtung der Einhandbedienungsrichtung verläuft.

Die Betätigungseinrichtung ist derart ausgebildet, dass das Führungselement und das Entriegelungsmittel auf der Oberseite des Innenausstattungsteile s, insbesondere einer Rückenlehne, angeordnet sind.

Bevorzugt sind aber auch Anordnungen im Seitenbereich oder im Übergangsbereich zwischen Oberseite und Seitenbereich des Innenausstattungsteiles.

Dabei sind das Führungselement und das Entriegelungsmittel in einer, im Wesentlichen vertikal oder horizontalen Lage oder dazwischen im Innenausstattungsteil, insbesondere in der Rückenlehne, angeordneten Ausnehmung auf dessen Oberseite, an dessen Seite oder in dem Bereich dazwischen angeordnet, wobei die sich bei der Einhandbedienung ausbildenden jeweiligen Angriffsbereiche am Führungselement beziehungsweise am Entriegelungsmittel im Wesentlichen außerhalb des Innenausstattungsteiles oberhalb der Ausnehmung, insbesondere der Rückenlehne, ausgebildet sind.

Bevorzugt weist das innenausstattungsteilfeste Führungselement eine zum Entriegelungsmittel gerichtete Abwinkelung auf, die somit im Wesentlichen außerhalb des Innenausstattungsteiles angeordnet ist, deren Oberfläche im Wesentlichen den ersten Angriffsbereich zur Führung des Innenausstattungsteiles, insbesondere der Rückenlehne, bildet.

Dabei kann das Führungselement mit der Abwinkelung so flach ausgebildet sein, dass der erste Angriffsbereich bereits einen Übergang zum Rückenlehnenpolster oder einer anderen Struktur der Rückenlehne bildet, so dass der Kontakt nicht am Führungselement stattfindet, sondern sich der erste Angriffsbereich nur oder zumindest teilweise am Sitzpolster oder der sitzfesten Struktur ausgebildet ist.

Ferner bevorzugt weist das Entriegelungsmittel eine Formkante auf, die außerhalb des Innenausstattungsteiles angeordnet ist, deren Oberfläche im Wesentlichen den zweiten Angriffsbereich zur Entriegelung des Innenausstattungsteiles, insbesondere der Rückenlehne, bildet.

Erfindungsgemäß kann Führungselement und Entriegelungsmittel so ausgebildet sein, dass der Sitzlehnengriff insgesamt kaum aus der Sitzstruktur herausragt und insgesamt sehr flach gestaltet ist. Vorzugsweise ist der Sitzlehnengriff der Oberkontur der Rückenlehne angenähert. Gerade dann geht der erste und zweite Angriffsbereich mögliche weise, je nachdem wie der Benutzer an dem Sitzlehnengriff angreift, zumindest teilweise oder ganz auf das Rückenlehnenpolster oder eine andere in diesem Bereich ausgebildete Sitzstruktur über.

Als Übertragungsmittel, welche die Entriegelungsbewegung des Entriegelungsmittels zu dem innenausstattungsteilseitigen Mechanismus übertragen, dienen am Entriegelungsmittel angreifende Bowdenzüge, Betätigungshebel, Betätigungsstangen oder dergleichen.

Ver- und entriegelt werden innenausstattungsteilseitige Mechanismen zur Klappung der Rückenlehne gegenüber einem Sitzteil oder zur Freigabe des Sitzlängsverstellung.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine Vorderansicht auf eine Rückenlehne mit de n erfindungsgemäßen Rückenlehnengriff;
- Figur 2: einen Schnitt durch die Rückenlehne im Bereich des Rückenlehnengriffes und eine Darstellung der Bedienung von vorn und
- Figur 3: einen Schnitt durch die Rückenlehne im Bereich des Rückenlehnengriffes und' eine Darstellung der Bedienung von hinten.

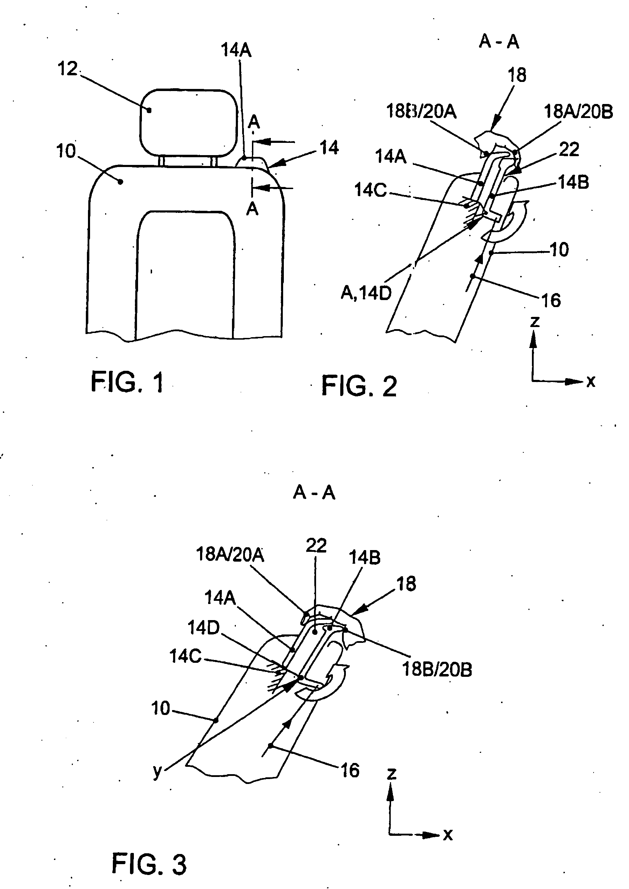

Nachfolgend wird gleichzeitig auf die Figuren 1, 2 und 3 Bezug genommen, wobei gleiche Bauteile jeweils mit gleichen Bezugszeichen versehen worden sind. Figur 1 zeigt eine Vorderansicht und die Figuren 2 und 3 jeweils einen Schnitt durch ein mögliches Innenausstattungsteil, eine Rückenlehne 10, wobei sich die Figuren 2 und 3 dadurch unterscheiden, dass in Figur 2 eine Bedienung von vorn und in Figur 3 eine Bedienung von hinten ausgeführt wird.

Die Figuren 1 bis 3 zeigen jeweils die Rückenlehne 10, auf der beispielsweise eine Kopfstütze 12 angeordnet ist.

Die erfindungsgemäße Betätigungseinrichtung 14 des Ausführungsbeispieles ist im seitlichen, oberen Bereich der Rückenlehne 10 neben der Kopfstütze 12 angeordnet. Die Anordnung ist selbstverständlich nicht auf diesen oberen, seitlichen Bereich neben der Kopfstütze 12 der Rückenlehne 10 beschränkt, jedoch ist dieser Bereich für den Bediener, der beispielsweise auf dieser Seite in ein Kraftfahrzeug einsteigt, gut zu erreichen.

Die Betätigungseinrichtung 14 kann jedoch genauso im Seitenbereich oder im Übergangsbereich zwischen Oberseite und Seitenbereich der Rückenlehne 10 angeordnet werden. Beispielhaft erfolgt die Beschreibung jedoch weiter anhand der Betätigungseinrichtung 14 in der Anordnung auf der Oberseite der Rückenlehne 10.

Die Betätigungseinrichtung 14 ist auf der Oberseite der Rückenlehne 10 angeordnet, wobei in Figur 1 nur ein Führungselement 14A der Betätigungseinrichtung 14 sichtbar ist.

Um die weiteren Bauteile der Betätigungseinrichtung 14 zu zeigen ist, gemäß Figur 1, ein Schnitt A-A angetragen, der in den Figuren 2 und 3 dargestellt ist und die weiteren Details der Betätigungseinrichtung 14 zeigt.

Zur Betätigungseinrichtung 14 gehört neben dem Führungselement 14A ein Entriegelungsmittel 14B, wobei das Führungselement 14A fest in der Rückenlehne 10 angeordnet ist, während das Entriegelungsmittel 14B relativ zum Führungselement 14A bewegl ch angeordnet ist.

Das Führungselement 14A ist beispielsweise fest an einer Rückenlehnenstruktur 14C befestigt, während das Entriegelungsmittel 14B im Ausführungsbeispiel in einem Schwenklager 14D gelagert ist, dessen Schwenkachse A quer zur Ver- und Entriegelungsrichtung des Entriegelungsmittels 14B verläuft.

Das Entriegelungsmittel 14B ist im Ausführungsbeispiel beispielsweise ein Entriegelungshebel, an dessen einem Hebelarm ein Übertragungsmittel 16 angreift, welches im Ausführungsbeispiel beispielsweise ein Bowdenzug ist. Dieses Übertragungsmittel 16 kann selbstverständlich neben einem Bowdenzug auch ein weiterer Betätigungshebel oder eine Betätigungsstange oder dergleichen sein. Der andere Hebelarm des Entriegelungsmittels 14B bildet den zu betätigenden Bereich des Enthegelungshebel 14B aus.

Das Entriegelungsmittel 14B ist nahe des Führungselementes 14A angeordnet und zwar so, dass eine Einhandbedienung beispielsweise der Rückenlehne 10 zum Klappen oder beispielsweise eine Verschiebung des gesamten Kraftfahrzeugsitzes jeweils in oder entgegen der Fahrtrichtung möglich ist, bei der die Kräfte zur Ausführung der jeweiligen Bewegung von dem Führungselement 14A aufgenommen und in die Rückenlehnenstruktur übertragen werden, während das Entriegelungsmittel 14B lediglich geschützt von dem Führungselement 14A die Ver- und Entriegelung bewirkt.

Zur Verdeutlichung ist in den Figuren 2 und 3 jeweils eine Bedienhand 18 dargestellt, deren Finger 18A und deren Handballen 18B je nach Angriffsrichtung der Einhandbedienung am Führungselement 14A beziehungsweise am Entriegelungsmittel 14B einen ersten und einen zweiten Angriffsbereich 20A, 20B der Bedienhand 18 ausbilden.

Der Angriffsbereich 20A, 20B an der Betätigungseinrichtung 14 liegt außerhalb der Rückenlehne 10, während die restlichen Bereiche des Führungselementes 14A und des Entriegelungsmittels 14B innerhalb der Rückenlehne 10 in einer im Wesentlichen vertikal verlaufenden Ausnehmung 22, die auf der Oberseite der Rückenlehne 10 beginnt, angeordnet sind.

Zudem ist das Führungselement 14A im Bereich außerhalb der Rückenlehne 10 in Richtung des Entriegelungsmittels 14B abgewinkelt und schützt das Entriegelungsmittel 14B vor ungewollten Bedienbetätigungen. Das Entriegelungsmittel 14B selbst weist einen unterhalb dieser Abwinkelung 24 liegenden mit einer Formkante ausgeprägten Bereich auf, der das Ergreifen des Entriegelungsmittels 14B erleichtert. Die Ausprägung muss jedoch nicht zwingend ausgebildet sein.

Die vorteilhafte Ausbildung dieser Betätigungseinrichtung 14 in eir em Kraftfahrzeug liegt gemäß Figur 2 darin, dass bei einer Einhandbedienung von vorn bei einer Angriffsrichtung entgegen einer Vorwärts- Fahrtrichtung eines Kraftfahrzeuges, der erste Angriffsbereich 20A durch den Handballen 18B am Führungselement 14A erfolgt, während der zweite Angriffsbereich 20B durch die Finger 18A am Entriegelungsmittel 14B ausgebildet wird.

Eine Entriegelung erfolgt also durch die Finger 18A, durch Schwenken des Entriegelungsmittels 14B in Fahrtrichtung, wonach unter Beibehaltung des Angriffs an den Angriffsbereich 20A, 20B die gewünschte Verlagerung der Rückenlehne 10 gegenüber einem nicht dargestellten Sitzteil oder die gewünschte Verlagerung des Kraftfahrzeugsitzes jeweils in oder entgegen der Fahrtrichtung möglich ist.

Umgekehrt erfolgt, gemäß Figur 3, bei einer Einhandbedienung von hinten, also einer Angriffsrichtung in Vorwärts-Fahrtrichtung eines Kraftfahrzeuges, gleichermaßen die Betätigung des Entriegelungsmittels 14B - in gleicher Richtung wie bei Figur 2 - im zweiten Angriffsbereich 20B, hier jedoch durch den Handballen 18B während die Finger 18A im ersten Angriffsbereich 20A am Führungselement 14A angreifen, wobei wiederum die gewünschte Verlagerung der Rückenlehne 10 gegenüber einem nicht dargestellten Sitzteil oder die gewünschte Verlagerung des Kraftfahrzeugsitzes jeweils in oder entgegen der Fahrtrichtung bewirkbar ist.

Denkbar ist zudem, dass die formkantenartige Ausprägung des Entriegelungsmittels 14B unterhalb der Abwinkelung 24 des Führungselementes 14A als Anschlag an der Innenfläche des Führungselementes 14A ausgeführt ist.

Selbstverständlich ist die Betätigungseinrichtung 14 nicht nur in einer Betätigungsrichtung des Entriegelungsmittels 14B in x-Richtung, wie dargestellt, anordbar um eine Verlagerung des Innenausstattungsteiles in x- beziehungsweise entgegen der x-Richtung zu bewirken, sondern die Betätigungseinrichtung 14 kann auch um 90° gedreht angeordnet sein, so dass eine Betätigungsrichtung des Entriegelungsmittels 14B in y-Richtung und Schwenkbewegungen in y-Richtung von Kraftfahrzeugsitzen oder anderen denkbaren Innenausstattungsteilen ausführbar sind. In einem solchen Fall ist ebenfalls eine Bedienung der Betätigungseinrichtung 14 aus beiden, gegenüberliegenden, Richtungen wie beschrieben möglich.

Die Betätigungseinrichtung 14 ist also so ausgelegt, dass sie eine besonders kompakte Bauweise aufweist, durch welche die Kräfte durch das Führungselement 14A in die Rückenlehnenstruktur übertragen werden und Verschleißerscheinungen am Entriegelungsmittel 14B reduziert werden, so dass letztlich keine Fehlbedienungen zu erwarten sind, da dass Ver- und Entriegelungsmittel 14B und das die Ver- und Entriegelungsbewegung übertragende am Entriegelungsmittel 14B angeordnete Übertragungsmittel 16 nur geringen Bedienkräften unterliegt.

Schließlich sei erwähnt, dass das Führungselement 14A mit der Abwinkelung 24 und das Entriegelungsmittel 14B so flach beziehungsweise klein ausgebildet sein kann, dass der erste beziehungsweise zweite Angriffsbereich 20A, 20B bereits einen Übergang zum Sitzpolster oder einer sitzfesten Struktur der Rückenlehne 10 bildet, so dass der Kontakt nicht nur allein am Führungselement 14A stattfindet, sondern sich der erste Angriffsbereich beziehungsweise zweite Angriffsbereich 20A , 20B nur oder zumindest teilweise am Sitzpolster oder der sitzfesten Struktur ausbildet.

Erfindungsgemäß können das Führungselement 14A und das Entriegelungsmittel 14B so ausgebildet sein, dass die Betätigungseinrichtung 14, also der Rückenlehnengriff insgesamt, kaum aus der Rückenlehnenstruktur herausragt und insgesamt sehr flach gestaltet ist. Vorzugsweise ist die Betätigungseinrichtung 14 der Oberkontur der Rückenlehne 10 angenähert. Gerade dann gehen der erste und zweite Angriffsbereich 20A, 20B möglicherweise, je nachdem wie der Bendiener 18 an dem Sitzlehnengriff angreift, zumindest teilweise oder ganz auf das Sitzpolster oder eine andere in diesem Bereich ausgebildete Sitzstruktur über.

### Bezugszeichenliste

- 10: Rückenlehne
- 12: Kopfstütze
- 14: Betätigungseinrichtung
- 14A: Führungselement
- 14B: Entriegelungsmittel
- 14C: Festlager an Rückenlehnenstruktur
- 14D: Schwenklager
- 16: Übertragungsmittel
- 18: Bedienhand
- 18A: Finger
- 18B: Handbaflen
- 20A: erster Angriffsbereich
- 20B: zweiter Angriffsbereich
- 22: Ausnehmung
- 24: Abwinkelung
- A: Schwenkachse Entriegelungselement 14B

## Patentansprüche

1. Betätigungseinrichtung (14), die in ein Innenausstattungsteil (10) eines Kraftfahrzeuges eines Kraftfahrzeugsitzes einbaubar ist, deren Einhandbedienung eine begrenzte Bewegung eines Entriegelungsmittels (14B) bewirkt und dessen Bewegung auf mindestens ein, zwischen Entriegelungsmittel (14B) und mindestens einem ausstattungsteilseitigen Mechanismus angeordnetes, Übertragungsmittel (16) übertragbar ist, wobei eine Entriegelungsbewegung mindestens einen ausstattungsteilseitigen Mechanismus über das am Entriegelungsmittel (14B) angreifende Übertragungsmittel (16) freigibt, wonach das Innenausstattungsteil (10) unter Führung eines Führungselementes (14A) in eine gewünschte Richtung verlagerbar ist, wozu das Entriegelungsmittel (14B) nahe eines innenausstattungsteilfesten Führungselementes (14A) angeordnet ist,
**dadurch gekennzeichnet, dass**
das Entriegelungsmittel (14B) und das Führungselement (14A) Angriffsbereiche (20A, 20B) aufweisen, die außerhalb des Innenausstattungsteiles (10) angeordnet sind, wobei eine durch eine Bedienhand (18) vorgenommene Einhandbedienung, je nach Angriffsrichtung der Bedienhand (18) durch Angriff der Finger (18A) oder des Handballens (18B) eine Entriegelung in einem zweiten Angriffsbereich (20A) des Entriegelungsmittels (14B) bewirkt, während gleichzeitig die Kräfte zur Verlagerung des Innenausstattungsteiles (10) je nach Angriffsrichtung durch den Angriff des Handballens (18B) oder der Finger (18A) der Bedienhand (18) in einem ersten Angriffsbereich (20A) des Führungselementes (14A) aufgenommen und unter Schutz des Entriegelungsmittels (14B) in die Struktur des Innenausstattungsteiles (10) übertragbar sind.

2. Betätigungseinrichtung nach Anspruch 1,
**dadurch gekennzeichnet, dass**
eine Angriffsrichtung der Einhandbedienung am Führungselement (14A) und dem Entriegelungselement (14B) - aus verschiedenen Richtungen - zur Verlagerung des Innenausstattungsteiles in eine vorgebbare Richtung stets zu einer von der Angriffsrichtung unabhängigen gleichgerichteten Entriegelungsbewegung dem Entriegelungsmittels (14B) führt.

3. Betätigungseinrichtung nach Anspruch 2,
**dadurch gekennzeichnet, dass**
die Einhandbedienung am Führungselement (14A) und dem Entriegetungsetement (14B) aus verschiedenen - gegenüberliegenden - Richtungen bezüglich des Innenausstattungsteiles von vorn und hinten oder von links oder rechts vornehmbar ist.

4. Betätigungseinrichtung nach Anspruch 1 bis 3,
**dadurch gekennzeichnet, dass**
die Entriegelungsbewegung des Entriegelungselementes (14B) eine Schwenkbewegung ist, deren Schwenkachse (A) jeweils quer zur Angriffsrichtung der Einhandbedienungsrichtung verläuft.

5. Betätigungseinrichtung nach Anspruch 1,
**dadurch gekennzeichnet, dass**
das Führungselement (14A) und das Entriegelungsmittel (14B) auf der Oberseite, im Seitenbereich oder im Übergangsbereich zwischen Oberseite und Seitenbereich des Innenausstattungsteiles angeordnet ist, so dass das Führungselement (14A) und das Entriegelungsmittel (14B) im Innenausstattungsteil vertikal oder horizontal oder zwischen diesen Richtungen liegend angeordnet ist.

6. Betätigungseinrichtung nach Anspruch 2 und/oder 3,
**dadurch gekennzeichnet, dass**
das Führungselement (14A) und das Entriegelungsmittel (14B) in einer im Wesentlichen im Innenausstattungsteil, insbesondere in der Rückenlehne (10), ausgebildeten Ausnehmung (22) angeordnet ist, wobei die sich bei der richtungsabhängigen Einhandbedienung ausbildenden jeweiligen Angriffsbereiche (20A, 20B) einer Bedienhand (18) am Führungselement (14A) beziehungsweise am Entriegelungsmittel (14B) außerhalb des Innenausstattungsteiles, insbesondere der Rückenlehne (10), ausbilden.

7. Betätigungseinrichtung nach Anspruch 6,
**dadurch gekennzeichnet, dass**
die Ausnehmung (22) im Innenausstattungsteil, insbesondere in der Rückenlehne (10), auf der Oberseite, im Seitenbereich oder im Übergangsbereich zwischen Oberseite und Seitenbereich angeordnet ist, so dass das Führungselement 14A) und das Entriegelungsmittel (14B) im Innenausstattungsteil vertikal oder horizontal oder zwischen diesen Richtungen liegend angeordnet ist.

8. Betätigungseinrichtung nach Anspruch 1,
**dadurch gekennzeichnet, dass**
das innenausstattungsteilfeste Führungselement (14A) eine zum Entriegelungsmittel (14B) gerichtete Abwinkelung (24) aufweist, die außerhalb des Inneuausstattungsteiles angeordnet ist, deren Oberfläche im Wesentlichen den ersten Angriffsbereich (20A) zur Führung des Innenausstattungsteiles, insbesondere der Rückenlehne (10), bildet.

9. Betätigungseinrichtung nach Anspruch 1,
**dadurch gekennzeichnet, dass**
das Enfiegelungsmittel (14B) eine formkantenartige Ausbildung aufweist, die außerhalb des Innenausstattungsteiles angeordnet ist, dessen Kante im Wesentlichen den zweiten Angriffsbereich (20B) zur Entriegelung des Innenausstattungsteiles, insbesondere der Rückenlehne (10), bildet.

10. Betätigungseinrichtung nach Anspruch 1 bis 9,
**dadurch gekennzeichnet, dass**
Führungselement (14A) und das Entriegelungsmittel (14B) annähernd die Außenkontur des Innenausstattungsteiles, insbesondere der Rückenlehne (10) nachbilden und somit kaum
außerhalb des Innenausstattungsteiles liegen, so dass optisch der Eindruck entsteht, dass die Betätigungseinrichtung (14) zur Außenkontur der Rückenlehne (10) gehört.

11. Betätigungseinrichtung nach Anspruch 8,
**dadurch gekennzeichnet, dass**
das Entriegelungsmittel (14B) von der Abwinklung (24) des Führungselementes (14A) zumindest teilweise dachartig geschützt angeordnet ist.

12. Betätigungseinrichtungen nach Anspruch 1,
**dadurch gekennzeichnet, dass**
das am Entriegelungsmittel (14B) angreifende Übertragungsmittel (16) ein Bowdenzug oder ein Betätigungshebel oder eine Betätigungsstange oder dergleichen ist.

13. Betätigungseinrichtungen nach Anspruch 1,
**dadurch gekennzeichnet, dass**
der ausstattungsteilseitige Mechanismus ein Einriegelungsmechanismus zur Klappung der Rückenlehne (10) gegenüber einem Sitzteil oder ein Entriegelungsmechanismus zur Freigabe der Sitzlängsverstellung oder dergleichen ist.

## Claims

1. Actuating device (14) which can be fitted into an interior fitting part (10) of a motor vehicle seat of a motor vehicle and the single-handed operation of which brings about a limited movement of a release means (14B) and the movement of the latter can be transmitted to at least one transmission means (16) arranged between the release means (14B) and at least one mechanism on the fitting-part side, wherein a release movement releases at least one mechanism on a fitting-part side via the transmission means (16) acting on the release means (14B), after which the interior fitting part (10) can be shifted in a desired direction under guidance by a guide element (14A), for which purpose the release means (14B) is arranged in the vicinity of a guide element (14A) mounted on the interior fitting part, **characterized in that** the release means (14B) and the guide element (14A) have engagement regions (20A, 20B) which are arranged outside the interior fitting part (10), a single-handed operation undertaken by an operating hand (18), by engagement of the fingers (18A) or of the ball of the thumb (18B) depending in each case on the direction of engagement of the operating hand (18), causing release in a second engagement region (20A) of the release means (14B) while at the same time the forces for shifting the interior fitting part (10), by engagement of the ball of the thumb (18B) or the fingers (18A) of the operating hand (18) depending on the direction of engagement, being absorbed in a first engagement region (20A) of the guide element (14A) and being transmittable into the structure of the interior fitting part (10) with protection of the release means (14B).

2. Actuating device according to Claim 1, **characterized in that** a direction of engagement of the single-handed operation on the guide element (14A) and on the release element (14B) - from different directions - for shifting the interior fitting part in a predetermined direction always leads to a unidirectional release movement of the release means (14B) irrespective of the direction of engagement.

3. Actuating device according to Claim 2, **characterized in that** the single-handed operation on the guide element (14A) and the release element (14B) from various - opposite - directions with respect to the interior fitting part can be undertaken from the front and rear or from the left or right.

4. Actuating device according to Claims 1 to 3, **characterized in that** the release movement of the release element (14B) is a pivoting movement, the pivot axis (A) of which in each case runs transversely with respect to the direction of engagement of the single-handed operation direction.

5. Actuating device according to Claim 1, **characterized in that** the guide element (14A) and the release means (14B) are arranged on the upper side, in the side region or in the transition region between the upper side and side region of the interior fitting part, and therefore the guide element (14A) and the release means (14B) are arranged in the interior fitting part vertically or horizontally or lying between said directions.

6. Actuating device according to Claim 2 and/or 3, **characterized in that** the guide element (14A) and the release means (14B) are arranged in a recess (22) substantially formed in the interior fitting part, in particular in the backrest (10), the respective engagement regions (20A, 20B) which are formed for the direction-dependent single-handed operation and are intended for an operating hand (18) on the guide element (14A) and on the release means (14B) are formed outside the interior fitting part, in particular the backrest (10).

7. Actuating device according to Claim 6, **characterized in that** the recess (22) is arranged in the interior fitting part, in particular in the backrest (10), on the upper side, in the side region or in the transition region between the upper side and side region, and therefore the guide element (14A) and the release means (14B.) are arranged in the interior fitting part vertically or horizontally or lying between said directions.

8. Actuating device according to Claim 1, **characterized in that** the guide element (14A) which is mounted on the interior fitting part has an angled portion (24) which is directed towards the release means (14B), is arranged outside the interior fitting part and the surface of which substantially forms the first engagement region (20A) for guiding the interior fitting part, in particular the backrest (10).

9. Actuating device according to Claim 1, **characterized in that** the release means (14B) has a formation which is in the manner of a shaped edge and is arranged outside the interior fitting part, the edge of which substantially forms the second engagement region (20B) for releasing the interior fitting part, in particular the backrest (10).

10. Actuating device according to Claims 1 to 9, **characterized in that** the guide element (14A) and the release means (14B) approximately imitate the outer contour of the interior fitting part, in particular the backrest (10), and therefore lie scarcely outside the interior fitting part, thus resulting in the impression visually that the actuating device (14) belongs to the outer contour of the backrest (10).

11. Actuating device according to Claim 8, **characterized in that** the release means (14B) is arranged protected at least partially in the manner of a roof by the angled portion (24) of the guide element (14A).

12. Actuating device according to Claim 1, **characterized in that** the transmission means (16) acting on the release means (14B) is a Bowden cable or an actuating lever or an actuating rod or the like.

13. Actuating device according to Claim 1, **characterized in that** the mechanism which is on the fitting-part side is a locking mechanism for folding the backrest (10) in relation to a seat part or an unlocking mechanism for releasing the seat longitudinal adjustment or the like.

## Revendications

1. Dispositif d'actionnement (14), qui peut être incorporé dans une pièce d'équipement intérieur (10) d'un véhicule automobile d'un siège d'un véhicule automobile, dont la commande d'une main provoque un mouvement limité d'un moyen de déverrouillage (14B) et dont le mouvement peut être transmis à au moins un moyen de transfert (16) disposé entre le moyen de déverrouillage (14B) et au moins un mécanisme du côté de la pièce d'équipement, un mouvement de déverrouillage libérant au moins un mécanisme du côté de la pièce d'équipement par le biais du moyen de transfert (16) venant en prise sur le moyen de déverrouillage (14B), si bien que la pièce d'équipement intérieur (10) peut alors être déplacée dans une direction souhaitée par guidage d'un élément de guidage (14A), ce pour quoi le moyen de déverrouillage (14B) est disposé à proximité d'un élément de guidage (14A) fixé à la pièce d'équipement intérieur,
**caractérisé en ce que**
le moyen de déverrouillage (14B) et l'élément de guidage (14A) présentent des régions d'engagement (20A, 20B) qui sont disposées à l'extérieur de la partie d'équipement intérieur (10), une commande d'une main effectuée par la main (18) d'un opérateur, en fonction de la direction d'engagement de la main (18) de l'opérateur, provoquant, par l'engagement des doigts (18A) ou de la paume de la main (18B), un déverrouillage dans une deuxième région d'engagement (20A) du moyen de déverrouillage (14B), tandis que simultanément les forces pour le déplacement de la pièce d'équipement intérieur (10) peuvent être reçues en fonction de la direction d'engagement par l'engagement de la paume de la main (18B) ou des doigts (18A) de la main (18) de l'opérateur dans une première région d'engagement (20A) de l'élément de guidage (14A) et peuvent être transmises en protégeant le moyen de déverrouillage (14B) dans la structure de la pièce d'équipement intérieur (10).

2. Dispositif d'actionnement selon la revendication 1,
**caractérisé en ce**
**qu'**une direction d'engagement de la commande d'une main sur l'élément de guidage (14A) et l'élément de déverrouillage (14B) - depuis différentes directions - pour le déplacement de la pièce d'équipement intérieur dans une direction prédéfinissable conduit toujours à un mouvement de déverrouillage du moyen de déverrouillage (14B) orienté dans le même sens indépendamment de la direction d'engagement.

3. Dispositif d'actionnement selon la revendication 2,
**caractérisé en ce que**
la commande d'une main sur l'élément de guidage (14A) et l'élément de déverrouillage (14B) à partir de différentes directions - opposées - peut être effectuée, par rapport à la pièce d'équipement intérieur, depuis l'avant et l'arrière, ou depuis la gauche ou la droite.

4. Dispositif d'actionnement selon les revendications 1 à 3,
**caractérisé en ce que**
le mouvement de déverrouillage de l'élément de déverrouillage (14B) est un mouvement de pivotement, dont l'axe de pivotement (A) s'étend à chaque fois transversalement à la direction d'engagement de la direction de commande d'une main.

5. Dispositif d'actionnement selon la revendication 1,
**caractérisé en ce que**
l'élément de guidage (14A) et le moyen de déverrouillage (14B) sont disposés du côté supérieur, dans la région latérale ou dans la région de transition entre le côté supérieur et la région latérale de la pièce d'équipement intérieur, de sorte que l'élément de guidage (14A) et le moyen de déverrouillage (14B) soient disposés dans la pièce d'équipement intérieur verticalement ou horizontalement ou entre ces directions.

6. Dispositif d'actionnement selon la revendication 2 et/ou 3,
**caractérisé en ce que**
l'élément de guidage (14A) et le moyen de déverrouillage (14B) sont disposés dans un évidement (22) réalisé essentiellement dans la partie d'équipement intérieur, notamment dans le dossier (10), les régions d'engagement (20A, 20B) respectives d'une main (18) d'un opérateur qui se forment lors de la commande d'une main en fonction de la direction, se formant sur l'élément de guidage (14A), respectivement sur le moyen de déverrouillage (14B) en dehors de la pièce d'équipement intérieur, notamment le dossier (10).

7. Dispositif d'actionnement selon la revendication 6,
**caractérisé en ce que**
l'évidement (22) dans la pièce d'équipement intérieur, en particulier dans le dossier (10), est disposé sur le côté supérieur, dans la région latérale ou dans la région de transition entre le côté supérieur et la région latérale, de sorte que l'élément de guidage (14A) et le moyen de déverrouillage (14B) soient disposés dans la pièce d'équipement intérieur verticalement ou horizontalement ou entre ces directions.

8. Dispositif d'actionnement selon la revendication 1,
**caractérisé en ce que**
l'élément de guidage (14A) fixé à la pièce d'équipement intérieur présente un coudage (24) orienté vers le moyen de déverrouillage (14B), qui est disposé en dehors de la pièce d'équipement intérieur, dont la surface forme essentiellement la première région d'engagement (20A) pour le guidage de la pièce d'équipement intérieur, notamment du dossier (10).

9. Dispositif d'actionnement selon la revendication 1,
**caractérisé en ce que**
le moyen de déverrouillage (14B) présente une forme en forme d'arête moulée, qui est disposée à l'extérieur de la pièce d'équipement intérieur, dont l'arête forme essentiellement la deuxième région d'engagement (20B) pour le déverrouillage de la pièce d'équipement intérieur, en particulier du dossier (10).

10. Dispositif d'actionnement selon les revendications 1 à 9,
**caractérisé en ce que**
l'élément de guidage (14A) et le moyen de déverrouillage (14B) reproduisent approximativement le contour extérieur de la pièce d'équipement intérieur, en particulier du dossier (10), et donc ne se situent que peu en dehors de la pièce d'équipement intérieur, de sorte que l'on conserve l'impression optique que le dispositif d'actionnement (14) appartient au contour extérieur du dossier (10).

11. Dispositif d'actionnement selon la revendication 8,
**caractérisé en ce que**
le moyen de déverrouillage (14B) est disposé de manière protégée au moins en partie en forme de toit par le coudage (24) de l'élément de guidage (14A).

12. Dispositif d'actionnement selon la revendication 1,
**caractérisé en ce que**
le moyen de transfert (16) venant en prise sur le moyen de déverrouillage (14B) est un câble Bowden ou un levier d'actionnement ou une barre d'actionnement ou similaire.

13. Dispositif d'actionnement selon la revendication 1,
**caractérisé en ce que**
le mécanisme du côté de la pièce d'équipement est un mécanisme de déverrouillage pour rabattre le dossier (10) par rapport à une partie de siège ou un mécanisme de déverrouillage pour libérer la position du siège réglable en longueur ou similaire.
